# FASCICULE DE BREVET EUROPEEN

(11) **EP 1 108 953 B1**
(45) Date de publication et mention de la délivrance du brevet: **31.08.2005**
(21) Numéro de dépôt: 00403322.1
(22) Date de dépôt: 28.11.2000
(51) Int. Cl.: F23C 10/10, F23L 9/04

(54) **Procédé pour l'amélioration de la combustion dans un système à lit fluidise circulant et système correspondant**
Verfahren und Vorrichtung zur Verbesserung der Verbrennung in einer zirkulierenden Wirbelschichtanlage
Process and apparatus for improving the combustion in a circulating fluidised bed system

(30) Priorité: 14.12.1999 FR 9915743
(43) Date de publication de la demande: 20.06.2001
(73) Titulaire: ALSTOM Power Boilers, 78140 Velizy-Villacoublay (FR)
(72) Inventeur: Malaubier, François, 92350 Le Plessis Robinson (FR); Duche, Patrick, 91300 Massy (FR)
(74) Mandataire: Feray, Valérie

(56) Documents cités:
- DE-A- 19 622 299
- US-A- 4 683 840
- US-A- 4 824 360
- US-A- 5 911 956

## Description

L'invention concerne un procédé pour l'amélioration de la combustion dans un système de combustion à lit fluidisé circulant, elle concerne aussi les systèmes mettant en oeuvre ce procédé.

Comme il est connu, ce genre de système brûle des combustibles solides concassés, des combustibles liquides ou des combustibles gazeux, notamment dans les centrales thermiques de production d'électricité. Il a pour inconvénient de produire des oxydes d'azote NOx et l'on cherche donc à limiter les émissions de ces oxydes, notamment en favorisant la libération des espèces azotées du combustible dans un milieu faiblement oxydant, voire même réducteur. Une telle limitation est classiquement obtenue par réalisation de foyers où il est prévu un agencement permettant un étagement de l'air à des niveaux différents sur la hauteur du foyer.

Une solution décrite dans le brevet FR 2 587 090 prévoit d'injecter de l'air dit primaire, dans une zone située au bas de foyer, avec un débit déterminé de manière à obtenir un coefficient d'excès d'air tel qu'une atmosphère réductrice y soit créée. Une injection d'air, dit secondaire est réalisée sur un ou plusieurs étages au dessus de cette zone basse de foyer, pour créer une zone oxydante s'étendant sur le reste de la hauteur du foyer. Toutefois les solutions connues ne sont pas suffisamment performantes et l'invention vise donc à permettre d'obtenir une diminution des émissions d'oxyde d'azote NOx nocives dans un système de combustion à lit circulant fluidisé associant de manière connue en soi un foyer et un cyclone, sans diminution du rendement de combustion du système.

L'invention propose donc un procédé pour améliorer la combustion dans un système, de type à lit fluidisé circulant, qui comporte un foyer associé à au moins un cyclone ayant un extrados et un intrados, notamment pour la fourniture d'énergie à un échangeur thermique dans le cadre d'une installation produisant de l'électricité. Le système est supposé fonctionner à partir de combustible introduit au bas du foyer où est créée une atmosphère réductrice et où le combustible subit une pyrolyse avec séparation en deux phases l'une, solide et composée de particules de coke contenant une fraction azote-coke provenant du combustible d'origine et l'autre, gazeuse, contenant les matières volatiles et notamment le reliquat de l'azote contenu dans le combustible d'origine. Les particules et les matières volatiles s'élèvent dans le foyer où la combustion se poursuit en laissant subsister des particules incomplètement brûlées qui sont aspirées et renvoyées au bas du foyer par action cyclonique. Il est ainsi offert une nouvelle chance aux particules solides contenant encore du carbone imbrûlé de parfaire leur combustion. Une injection d'air, dit tardif, est prévue, en plus de l'injection d'air primaire réalisée au bas du foyer et d'au moins une injection d'air secondaire réalisée pour créer une atmosphère faiblement oxydante dans le foyer au-dessus de la zone basse de celui-ci où est créée une atmosphère réductrice.

Selon une forme préférée de mise en oeuvre du procédé selon l'invention, il est prévu qu'une modification de la trajectoire des particules aspirées par action cyclonique soit réalisée sous l'action de l'air tardif injecté entre le haut du foyer et l'entrée du cyclone de telle manière que l'air tardif applique aux particules une force verticale dirigée vers le bas et qu'il les dirige vers l'extrados du cyclone pour améliorer le rendement de captation cyclonique et en conséquence le rendement de combustion.

Selon une forme de mise en oeuvre du procédé selon l'invention, l'injection d'air tardif, neuf et chaud, est exploitée pour améliorer la combustion des imbrûlés gazeux contenus dans les fumées sortant du foyer, par l'action complémentaire de brassage qu'elle entraîne.

Selon une forme de mise en oeuvre du procédé selon l'invention, le débit d'air tardif injecté en amont de l'entrée du cyclone est choisi de l'ordre de 5 à 30% du débit total d'air fourni pour la combustion au système.

Selon une forme de mise en oeuvre du procédé selon l'invention, les injections d'air primaire, secondaire et tardif sont telles qu'elles conduisent à des coefficients d'excès d'air λ qui sont respectivement de l'ordre de 0,5 au bas du foyer dans la zone où l'atmosphère est réductrice, de 0,95 à 1,15 dans une partie supérieure du foyer, située au-dessus de la précédente, où l'atmosphère est faiblement oxydante et de 1,15 à 1,3 au-delà, où l'injection d'air tardif produit son effet. Une réduction significative des émissions d'oxydes d'azote NOx est ainsi permise.

L'invention propose aussi un système de combustion, de type à lit fluidisé circulant, permettant la mise en oeuvre du procédé évoqué ci-dessus.

Ce système comporte un foyer associé à au moins un cyclone ayant un extrados et un intrados, notamment pour la fourniture d'énergie à un échangeur thermique dans le cadre d'une installation produisant de l'électricité, il fonctionne à partir de combustible introduit au bas du foyer où est créée une atmosphère réductrice et où ce combustible subit une pyrolyse avec séparation en deux phases l'une, solide et composée de particules de coke contenant une fraction azote-coke provenant du combustible d'origine et l'autre, gazeuse, contenant les matières volatiles et notamment le reliquat de l'azote contenu dans le combustible d'origine, les particules et les matières volatiles s'élevant dans le foyer où la combustion se poursuit en laissant subsister des particules incomplètement brûlées qui sont aspirées et renvoyées au bas du foyer par le cyclone.

Selon une caractéristique de l'invention , le système de combustion comporte un agencement d'injection d'air comportant des moyens pour injecter de l'air, dit tardif, neuf et chauffé, positionnés entre le haut du foyer et l'entrée du cyclone et réalisés à travers d'ouvertures disposées à la fois sur le dessus et sur un côté de la gaine reliant le haut du foyer et le cyclone, en plus des moyens permettant une injection d'air primaire au bas du foyer pour y créer une atmosphère réductrice et de moyens permettant une injection d'air secondaire pour créer une atmosphère faiblement oxydante dans une zone du foyer située au-dessus de la zone basse de celui-ci où est créée une atmosphère réductrice.

Selon l'invention, les moyens d'injection d'air tardif comportent des injecteurs débouchant dans une gaine, par l'intermédiaire de laquelle le haut du foyer est relié à l'entrée du cyclone, au travers d'orifices localisés sur la paroi de gaine située du côté de l'intrados du cyclone, ainsi qu'éventuellement des injecteurs débouchant au travers d'orifices ménagés dans la gaine au travers de son toit.

Selon l'invention, le système de combustion comporte des injecteurs d'air tardif alimentés en air chaud depuis un réchauffeur d'air du système, via un circuit qui fournit l'air secondaire de ce système

Selon une variante de réalisation de l'invention, le système de combustion comporte des injecteurs d'additif, qui sont positionnés dans des orifices d'injecteurs d'air tardif de manière à pénétrer dans la gaine par leur intermédiaire et pour favoriser la pénétration de l'additif à l'intérieur de la masse de fumées ou cet additif est injecté..

L'invention, ses caractéristiques et ses avantages sont précisés dans la description qui suit en liaison avec les figures évoquées ci-dessous.
La figure 1 présente un schéma synoptique d'un système de combustion, du type à lit fluidisé circulant, qui permet de fournir de l'énergie sous forme thermique à un échangeur de chaleur.
La figure 2 présente un diagramme montrant l'évolution du coefficient d'excès d'air pour un système classique de combustion à lit fluidisé circulant, qui est schématisé sur la figure 3.
La figure 4 présente un diagramme montrant l'évolution du coefficient d'excès d'air pour un système de combustion, à lit fluidisé circulant, selon l'invention, tel que schématisé sur la figure 5.
Les figures 6 et 7 présentent respectivement un montage d'injection d'air tardif selon l'invention selon une vue de dessus et une vue latérale selon la direction F sur la figure 6.

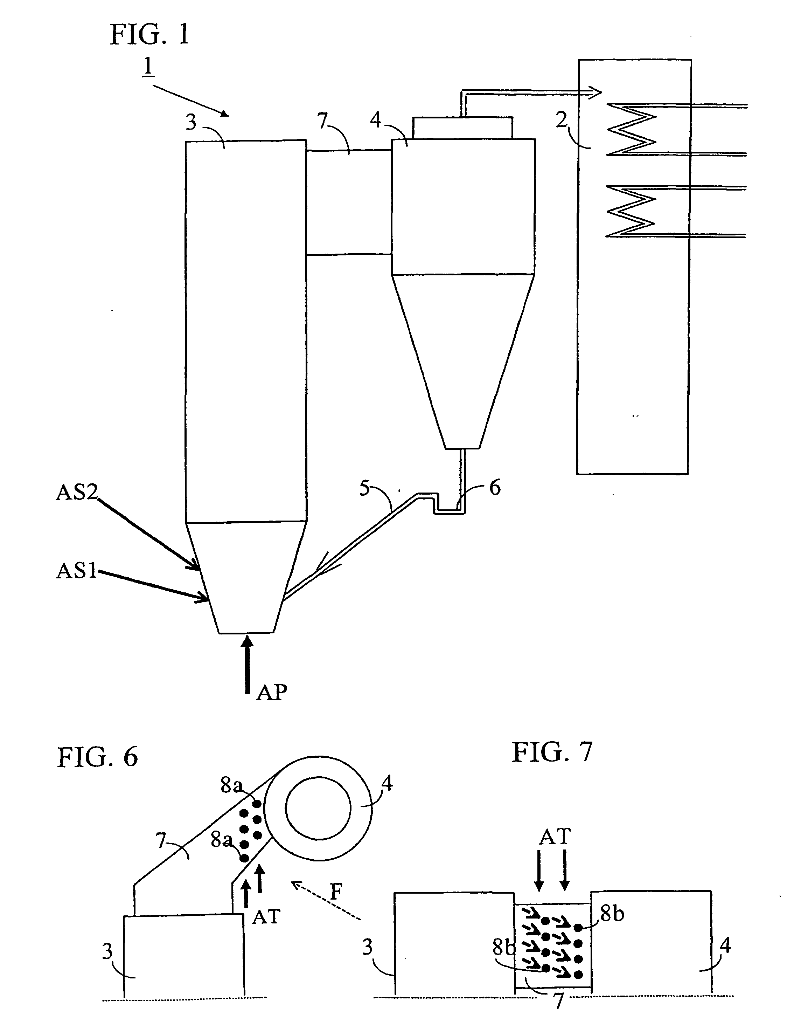

Un exemple connu de système de combustion 1, du type à lit fluidisé circulant, est schématisé sur la figure 1, ce système est supposé destiné à brûler du combustible, d'origine fossile, tel que du charbon ou du lignite. Il est par exemple associé à un échangeur de chaleur 2, pour fournir de l'énergie sous forme thermique, par exemple dans le cadre d'une installation produisant industriellement de l'électricité. Un foyer 3 et un cyclone 4 constituent les éléments essentiels du système de combustion, ils sont associés entre eux et à l'échangeur de chaleur, de manière connue, et ils sont ici supposés fournir de l'énergie thermique à un échangeur de chaleur 2.

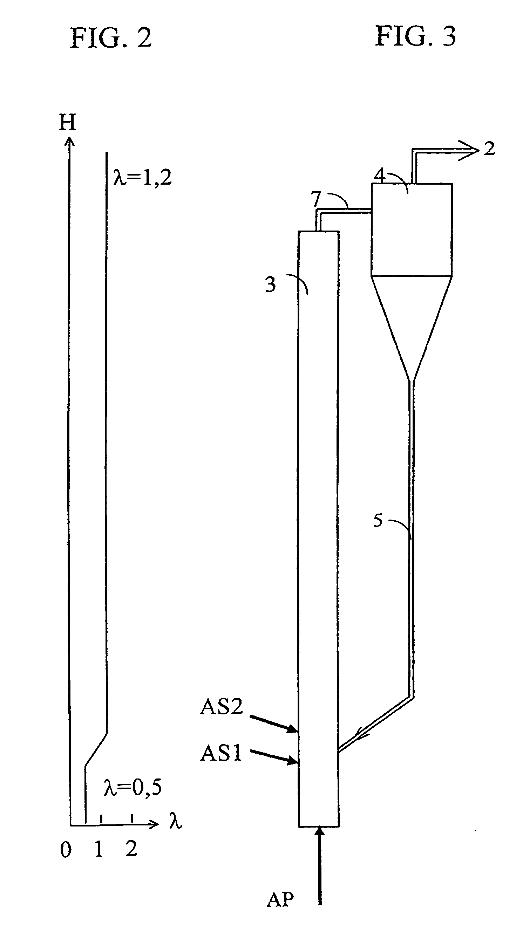

Les fumées chargées de particules de cendres contenant du carbone imbrûlé sont centrifugées au niveau du cyclone 4. Les particules, ainsi récupérées, sont réinjectées dans la partie basse du foyer 3 par l'intermédiaire d'un conduit 5 à siphon 6. De l'air primaire est injecté par le dessous dans la partie la plus basse du foyer 3, comme symbolisé par la flèche AP. Il règne une atmosphère réductrice dans cette partie basse de foyer où le coefficient λ d'excès d'air est nettement inférieur à 1, comme on le voit sur la figure 2 montrant la variation de ce coefficient λ sur la hauteur du système de combustion schématisé sur la figure 3. Dans cette zone, le combustible subit une pyrolyse et la matière combustible est séparée en deux phases. L'une des deux phases est ainsi constituée de grains de coke et d'une fraction de l'azote du combustible d'origine, couramment désignée par l'expression azote-coke. L'autre phase regroupe les matières volatiles et notamment le reliquat de l'azote du combustible d'origine. Comme il est connu, la fraction d'azote volatil est d'autant plus importante que le combustible a une teneur en matières volatiles plus élevée. Ainsi dans le cas de combustibles constitués de charbons très réactifs, tels que du lignite, du sub-bitumineux ou du bitumineux, la part de l'azote volatil est significativement plus élevée que la part d'azote-coke.

Les grains de coke peuvent séjourner dans la zone réductrice située en partie basse de foyer et de l'azote moléculaire N₂ est alors retrouvé parmi les produits de combustion de l'azote-coke. Le temps de séjour des grains de coke dans la zone réductrice est en fait essentiellement fonction de la grosseur de chaque grain.

Les plus petits grains quittent rapidement la zone sous la forme de particules constituées de cendres contenant du carbone imbrûlé et d'un reliquat d'azote-coke dont la combustion se poursuit dans la partie supérieure du foyer 3. Ces particules seront brûlées encore plus complètement, après avoir été aspirées par le cyclone 4, via une gaine 7 débouchant en haut de foyer, lorsqu'elles sont réinjectées par l'intermédiaire de ce cyclone en partie basse de foyer, via le conduit 5.

Il est donc important que le rendement de captation du cyclone soit le plus élevé possible, pour qu'un recyclage optimal soit obtenu.

Les matières volatiles et notamment l'azote volatil, sortent très rapidement de la zone réductrice pour atteindre des zones situées au-dessus de cette zone réductrice dans lesquelles de l'air est progressivement introduit, comme schématisé par les entrées d'air secondaire étagé AS1 et AS2, sur les figures 1, 3 et 5. L'injection étagée d'air secondaire est poursuivie jusqu'à obtention de conditions nettement oxydantes conduisant à un coefficient λ d'excès d'air qui est typiquement compris entre 1,15 et 1,30 et par exemple 1,2 comme illustré sur le diagramme de la figure 2. Cette combustion en atmosphère nettement oxydante conduit plus particulièrement à la production d'oxydes d'azote dont la source principale est l'azote volatil, en particulier dans le cas de combustibles réactifs, et dont une source secondaire est le reliquat d'azote-coke contenu dans les grains de coke partiellement imbrûlés.

Une technique usuelle d'abattement primaire des émissions d'oxydes d'azote est de sélectionner un faible excès d'air global dans la partie du foyer 3, classiquement désignée en anglais par "free board", dans laquelle les particules solides sont en circulation. Toutefois cette technique a des limites, car elle présente l'inconvénient d'avoir des conséquences néfastes sur le fonctionnement du lit fluidisé circulant du foyer 3, en particulier en ce qui concerne les échanges de chaleur avec les parois tubées et le rendement de combustion. A titre d'exemple, il a été observé qu'une diminution de l'excès d'air global conduisant d'un coefficient λ1 compris dans un intervalle 1,25 à 1,30 à un coefficient λ2 compris dans un intervalle 1,15 à 1,20 pouvait conduire à une diminution avantageuse des émissions d'oxyde d'azote NOx d'environ 20%, cette diminution s'accompagnant toutefois d'une diminution désavantageuse du rendement de combustion de 0,5 à 1 point.

Comme indiqué plus haut, l'invention permet d'obtenir un réglage de la stoechiométrie globale d'un système de combustion, du genre évoqué ci-dessus, qui assure une diminution des émissions d'oxydes d'azote NOx, comme explicité plus loin.

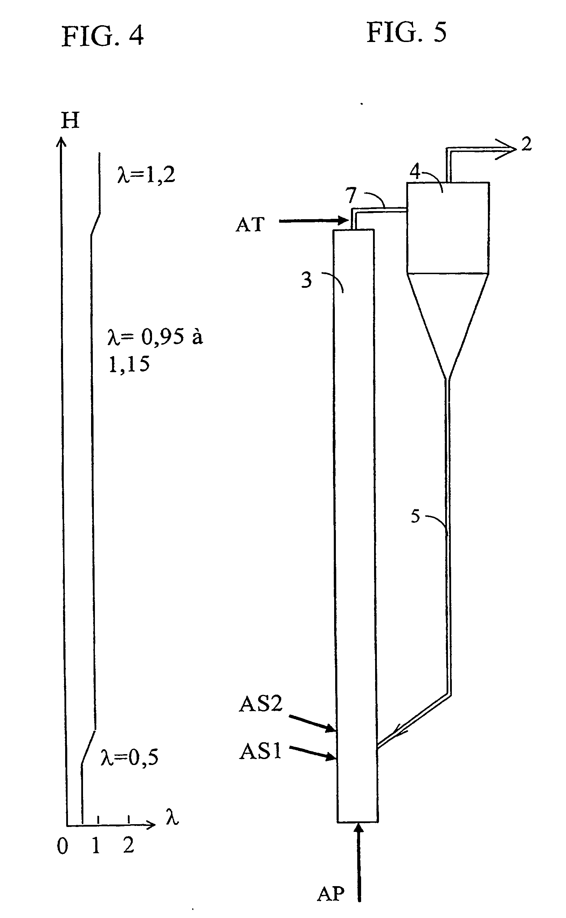

A cet effet et comme schématisé sur la figure 5, une entrée AT d'injection d'air, dit tardif, est ménagée dans la gaine 7 en amont de l'entrée du cyclone 4. Cette injection spécifique entraîne un étagement de l'air dans le foyer 3 qui est plus prononcée qu'avec le procédé antérieurement connu. Elle favorise l'existence d'une zone du foyer 3 dans laquelle les particules ont un relativement long temps de séjour en atmosphère faiblement oxydante.

Le diagramme de la figure 4 montre un exemple de variation du coefficient d'excès d'air λ sur la hauteur d'un système de combustion, tel que schématisé sur la figure 5, où est prévue une entrée AT d'injection d'air tardif, selon l'invention. Comme illustré en partie haute de diagramme, une variation du coefficient λ est obtenue. Dans l'exemple proposé ce coefficient a une valeur 1,2 dans la zone où l'injection d'air tardif produit son effet et comme cela était le cas sur pratiquement toute la partie haute du foyer dans le cas d'un système de combustion classique, tel que schématisé sur la figure 3.

Dans le cas d'un système de combustion comportant une entrée d'air tardif AT, selon l'invention, le coefficient λ reste par contre de l'ordre de 0,95 à 1,15 sur pratiquement toute la partie haute du foyer correspondant à celle dont le coefficient λ est égal à 1,2 sur le diagramme de la figure 2, à l'exception de la zone où les effets de l'injection d'air tardif se font sentir dans le cas illustré par les figures 4 et 5.

La réalisation de l'entrée d'injection d'air tardif est schématiquement représentée sur les figures 6 et 7 qui montrent une gaine 7 reliant la partie haute du foyer 3 à l'entrée du cyclone 4, respectivement dans une vue de dessus et une vue selon la direction F illustrée sur la figure 6.

Le débit d'air tardif injecté au niveau de l'entrée AT est déterminé de façon à obtenir un coefficient optimal d'excès d'air λ dans la partie "free board" dans laquelle les particules solides sont en circulation. Ce débit est par exemple choisi de l'ordre de 5 à 30% du débit total d'air de combustion.

L'air tardif injecté est préférablement de l'air neuf et chaud, il a par exemple une température de l'ordre de 200 à 400°. Il est par exemple prélevé, sur le circuit fournisseur d'air secondaire, en aval du réchauffeur d'air, non représenté ici, de ce circuit. Cet air chaud est injecté en amont du ou éventuellement des cyclone(s) du système de combustion. L'injection s'effectue par l'intermédiaire d'injecteurs d'air, classiques et non représentés ici, qui débouchent dans la gaine 7 au travers d'orifice 8 schématisés sur les figures 6 et 7. Ces injecteurs et notamment leurs orifices 8 sont disposés de manière que les jets d'air tardif modifient les trajectoires des particules solides pour les diriger vers l'extrados du cyclone (la paroi extérieure du cyclone) et qu'ils leur appliquent une force verticale (représentée par des petites flèches sur la figure 7) vers le bas, avant qu'elles ne soient captées par action cyclonique du cyclone 8 ou éventuellement d'un groupe de cyclones. Une amélioration du rendement de captation cyclonique des particules solides aspirées hors du foyer est obtenue grâce à l'action des jets d'air tardif sur les trajectoires des particules en mouvement dans la gaine 7. Cette amélioration du rendement de captation conduit à une amélioration du rendement de combustion du combustible solide.

Un brassage intense est réalisé dans le cyclone entre, d'une part, les fumées sortant du foyer, avec une faible teneur en oxygène résiduel et éventuellement une teneur significative en imbrûlés gazeux, tel que par exemple du CO, et d'autre part, de l'air tardif neuf, ce qui permet de terminer la combustion des imbrûlés gazeux.

Dans la forme de réalisation montrée sur les figures 6 et 7, des orifices 8b d'injection d'air tardif sont localisés sur la paroi verticale de gaine opposée à l'extrados du cyclone 7, cette paroi de gaine étant située du côté de l'intrados du cyclone (paroi intérieure du cyclone) ou, ici répartis en deux rangées d'orifices 8b visibles sur la figure 7, pour appliquer sur les particules solides traversant la gaine 7 une force qui les dirige vers l'extrados du cyclone comme représenté par la flèche AT sur la figure 6. Des orifices d'injection d'air tardif 8a sont localisés aussi sur le toit de la gaine 7, ici répartis en deux rangées d'orfices 8a visibles sur la figure 6, pour appliquer sur les particules solides traversant la gaine 7 une force qui les dirige vers le bas de la gaine 7 comme représenté par la flèche AT sur la figure 7 et par les petites flèches à côtés des orifices 8b sur la fifure 7. La forme et la disposition des divers orifices 8 sont préférablement choisies de manière que les ensembles que forment ces orifices s'étalent transversalement de manière maximale.

Selon une variante de réalisation, il est prévu de positionner des injecteurs d'additifs, non représentés ici, dans au moins certains des orifices d'injection d'air tardif 8a,8b. Ces injecteurs d'additif sont, par exemple, des cannes d'injection d'additif de dénitrification, lorsqu'une dénitrification non-catalytique (SNCR) est prévue. L'injection d'air tardif à grande vitesse favorise alors la pénétration de l'additif à l'intérieur de la masse de fumée où il est injecté.

## Revendications

1. Procédé pour améliorer la combustion dans un système (1), de type à lit fluidisé circulant, qui comporte un foyer (3) associé à au moins un cyclone (4) ayant un intrados et un extrados, notamment pour la fourniture d'énergie à un échangeur thermique (2) dans le cadre d'une installation produisant de l'électricité, et qui fonctionne à partir de combustible introduit au bas du foyer où est créée une atmosphère réductrice et où ce combustible subit une pyrolyse avec séparation en deux phases l'une, solide et composée de grains de coke et d'azote-coke provenant du combustible d'origine et l'autre, gazeuse, contenant les matières volatiles et notamment le reliquat de l'azote contenu dans le combustible d'origine, l'ensemble s'élevant dans le foyer où la combustion se poursuit en laissant subsister des particules incomplètement brûlées qui sont aspirées et renvoyées au bas du foyer par action cyclonique, ledit procédé prévoyant une injection d'air (AT), dit tardif, en plus de l'injection d'air primaire (AP) réalisée au bas du foyer et d'au moins une injection d'air secondaire (AS 1, A52) réalisée pour créer une atmosphère oxydante dans le foyer au-dessus de la zone basse de celui-ci où est créée une atmosphère réductrice, **caractérisé en ce qu'**il prévoit qu'une modification de la trajectoire des particules aspirées par action cyclonique soit réalisée sous l'action de l'air tardif injecté entre le haut du foyer et l'entrée du cyclone de telle manière que l'air tardif applique aux particules une force verticale dirigée vers le bas et qu'il les dirige vers l'extrados du cyclone pour augmenter le rendement de captation cyclonique et en conséquence le rendement de combustion du système par combustion de particules restant autrement imbrûlées.

2. Procédé, selon la des revendications 1, dans lequel le débit d'air tardif injecté en amont de l'entrée du cyclone est choisi de l'ordre de 5 à 30% du débit total d'air fourni pour la combustion au système.

3. Procédé, selon l'une des revendications 1 à 2, dans lequel les injections d'air primaire, secondaire et tardif sont telles qu'elles conduisent à des coefficients d'excès d'air λ qui sont respectivement de l'ordre de 0,5 au bas du foyer dans la zone où l'atmosphère est réductrice, de 0,95 à 1,15 dans une partie supérieure du foyer, située au-dessus de la précédente, où l'atmosphère est faiblement oxydante et de 1,15 à 1,3 au-delà, où l'injection d'air tardif produit son effet.

4. Système de combustion, de type à lit fluidisé circulant, qui comporte un foyer (3) associé à au moins un cyclone (4) ayant un intrados et un extrados, notamment pour la fourniture d'énergie à un échangeur thermique (2) dans le cadre d'une installation produisant de l'électricité, et qui fonctionne à partir de combustible introduit au bas du foyer où est créée une atmosphère réductrice et où ce combustible subit une pyrolyse avec séparation en deux phases l'une, solide et composée de particules de coke contenant une fraction azote-coke provenant du combustible d'origine et l'autre, gazeuse, contenant les matières volatiles et notamment le reliquat de l'azote contenu dans le combustible d'origine, les particules et les matières volatiles s'élevant dans le foyer où la combustion se poursuit en laissant subsister des particules incomplètement brûlées qui sont aspirées et renvoyées au bas du foyer par le cyclone, ledit système étant **caractérisé en ce qu'**il comporte un agencement d'injection d'air comportant des moyens pour injecter de l'air (AT), dit tardif, neuf et chauffé, positionnés entre le haut du foyer et une entrée du cyclone et réalisés à travers des ouvertures (8a,8b) disposées à la fois sur le dessus et sur un côté de la gaine (7) reliant le haut du foyer et le cyclone en plus des moyens permettant une injection d'air primaire (AP) au bas du foyer pour y créer une atmosphère réductrice et de moyens permettant une injection d'air secondaire (AS 1, A52) pour créer une atmosphère oxydante dans une zone du foyer située au-dessus de la zone basse de celui-ci où est créée une atmosphère réductrice.

5. Système de combustion, selon la revendication 4, dans lequel les moyens d'injection d'air tardif comportent des injecteurs débouchant dans une gaine (7), par l'intermédiaire de laquelle le haut du foyer est relié à l'entrée cyclonique, au travers d'orifices (8b) localisés sur la paroi de gaine située du côté de l'intrados du cyclone.

6. Système de combustion, selon la revendication 5, dans lequel les moyens d'injection d'air tardif comportent des injecteurs débouchant dans la gaine au travers d'orifices (8a) ménagés dans la gaine au travers de son toit.

7. Système de combustion, selon l'une des revendications 4 à 6, dans lequel les injecteurs d'air tardif sont alimentés en air chaud et neuf depuis un réchauffeur d'air du système, via un circuit qui fournit l'air secondaire de ce système.

8. Système de combustion, selon l'une des revendications 4 à 7, dans lequel des injecteurs d'additif sont positionnés dans des orifices d'injecteur d'air tardif de manière à pénétrer dans la gaine par leur intermédiaire et pour favoriser la pénétration de l'additif à l'intérieur de la masse de fumées ou cet additif est injecté.

## Claims

1. A method of improving combustion in a system (1) of the circulating fluidized bed type, which system includes a hearth (3) associated with at least one cyclone (4) having an inside wall and an outside wall and being used in particular for delivering energy to a heat exchanger (2) in an electricity-generating installation, and operates using fuel that is inserted into the bottom of the hearth, where a reducing atmosphere is created and where the fuel undergoes pyrolysis with separation into two phases, namely a solid phase made up of grains of coke and of nitrogen-coke coming from the original fuel, and a gaseous phase containing volatile matter and in particular the remaining nitrogen contained in the original fuel, both of the phases rising up inside the hearth where combustion continues while leaving incompletely burnt particles which are sucked up and returned to the bottom of the hearth by cyclone action, said method providing "late" air injection (AT) in addition to the primary air injection (AP) performed at the bottom of the hearth, and in addition to at least one secondary air injection (AS1, AS2) performed to create an oxidizing atmosphere in the hearth above its bottom zone in which a reducing atmosphere is created, said method being **characterized in that** it makes provision for the paths of the particles sucked up by cyclone action to be modified under the action of the late air injected between the top of the hearth and the inlet of the cyclone so that the late air applies a downwardly-directed vertical force on the particles, and so that it directs them towards the outside wall of the cyclone, so as to increase the collection efficiency of the cyclone, and thus increase the combustion efficiency of the system by burning particles that would otherwise remain unburnt.

2. A method according to claim 1, in which the flow rate of the late air injected upstream from the inlet of the cyclone is chosen to lie in the range approximately 5% of the total air flow rate delivered to the system for combustion purposes to approximately 30% of said total air flow rate.

3. A method according to claim 1 or claim 2, in which the primary, secondary, and late air injections are such that they lead to excess air coefficients λ that are respectively about 0.5 in a lower portion of the hearth in the zone in which the atmosphere is a reducing atmosphere, in the range 0.95 to 1.15 in an upper portion of the hearth, situated above the preceding portion, and in which the atmosphere is a weakly-oxidizing atmosphere, and from 1.15 to 1.3 beyond said upper portion, where the late injection produces its effects.

4. A combustion system of the circulating fluidized bed type which includes a hearth (3) associated with at least one cyclone (4) having an inside wall and an outside wall and being used in particular for delivering energy to a heat exchanger (2) in an electricity-generating installation, and which operates using fuel that is inserted into the bottom of the hearth, where a reducing atmosphere is created and where the fuel undergoes pyrolysis with separation into two phases, namely a solid phase made up of grains of coke and of nitrogen-coke coming from the original fuel, and a gaseous phase containing volatile matter and in particular the remaining nitrogen contained in the original fuel, the particles and the volatile matter rising up inside the hearth where combustion continues while leaving incompletely burnt particles which are sucked up and returned to the bottom of the hearth by the cyclone, said system being **characterized in that** it includes means for performing "late" air injection (AT) for injecting late, new and hot air, which means are positioned between the top of the hearth and the inlet of the cyclone and are made through openings (8a, 8b) disposed both in the top and in a side of the duct (7) connecting the top of the hearth and the cyclone, means for performing primary air injection (AP) into the bottom of the hearth so as to create a reducing atmosphere there, and means for performing secondary air injection (AS1, AS2) to create an oxidizing atmosphere in the zone of the hearth situated above its bottom zone in which a reducing atmosphere is created.

5. A combustion system according to claim 4, in which the late air injection means comprise injectors opening out into a duct (7) via which the top of the hearth is connected to the cyclone inlet, the injectors opening out into said duct via orifices (8b) situated in the duct, in the inside wall of the cyclone.

6. A combustion system according to claim 5, in which the late air injection means comprise injectors opening out into the duct via orifices (8a) provided in the duct through its roof.

7. A combustion system according to any one of claims 4 to 6, in which the late air injectors are fed with hot and new air from an air heater of the system, via a circuit that delivers the secondary air for the system.

8. A combustion system according to any one of claims 4 to 7, in which additive injectors are positioned in late air injector orifices so as to penetrate into the duct via said orifices, and so as to facilitate additive penetration into the mass of flue gases into which the additive is injected.

## Patentansprüche

1. Verfahren zur Verbesserung der Verbrennung in einer zirkulierenden Wirbelschichtanlage (1), die einen Feuerraum (3) besitzt, der mit mindestens einem Zyklon (4) verbunden ist, welcher eine Innenwölbung und eine Außenwölbung besitzt, insbesondere für die Lieferung von Energie an einen Wärmetauscher (2) im Rahmen einer Anlage, die Elektrizität produziert, und die ausgehend von dem Brennstoff funktioniert, der unten in den Feuerraum eingeführt wird, wo eine reduzierende Atmosphäre geschaffen wird, und wo dieser Brennstoff eine Pyrolyse mit Trennung in zwei Phasen erfährt, wobei eine fest ist und aus Koksperlen und Stickstoff-Koks besteht, der von dem ursprünglichen Brennstoff herrührt, und die andere, gasförmige Phase flüchtige Bestandteile und insbesondere den Rückstand an Stickstoff enthält, der in dem ursprünglichen Brennstoff vorhanden ist, wobei das Ganze in dem Feuerraum aufsteigt, in dem die Verbrennung stattfindet, wobei unvollständig verbrannte Partikel zurückbleiben, welche durch die Aktion des Zyklon angesaugt und wieder in den unteren Bereich des Feuerraums zurückgeschickt werden, und wobei das Verfahren eine Einblasung sogenannter verzögerter Luft (AT) vorsieht, und zwar zusätzlich zur Einblasung von Primärluft (AP) im unteren Bereich des Feuerraums und mindestens eine Sekundärlufteinblasung (AS 1, A52), die durchgeführt wird, um oberhalb der Zone, in der eine reduzierende Atmosphäre geschaffen wird, eine oxidierende Atmosphäre im Feuerraum zu schaffen, **dadurch gekennzeichnet, dass** es vorsieht, dass eine Änderung der Bahn der Partikel, die durch die Aktion des Zyklon angesaugt werden, durch die Einblasung verzögerter Luft zwischen dem oberen Bereich des Feuerraums und dem Zykloneintritt durchgeführt wird, so dass die verzögerte Luft eine vertikale Kraft auf die Partikel ausübt, welche nach unten geleitet wird, und dass sie in Richtung der Außenwölbung des Zyklons geführt werden, um den Wirkungsgrad der Zyklonabscheidung und folglich den Wirkungsgrad der Verbrennung in der Vorrichtung durch Verbrennung von Partikeln, die sonst unverbrannt bleiben würden, zu erhöhen.

2. Verfahren nach Anspruch 1, bei dem die Luftmenge an verzögerter Luft, die vor dem Eintritt des Zyklons eingeblasen wird, in der Größenordnung von 5 bis 30 % der Gesamtmenge der Luft liegt, die für die Verbrennung in der Vorrichtung geliefert wird.

3. Verfahren nach einem der Ansprüche 1 bis 2, wobei die Einblasung von Primärluft, Sekundärluft und verzögerter Luft so erfolgt, dass sie zu Luftüberschuss-Koeffizienten λ führen, die im unteren Bereich des Feuerraums in der Zone, wo die Atmosphäre reduzierend ist, in der Größenordnung von 0,5, in einem oberen Bereich des Feuerraums, der sich oberhalb des vorhergehenden befindet, wo die Atmosphäre leicht oxidierend ist, in der Größenordnung von 0,95 bis 1,15, und darüber, wo die Einblasung der verzögerten Luft ihre Wirkung zeigt, in der Größenordnung von 1,15 bis 1,3 liegt.

4. Wirbelschichtverbrennungsanlage, die einen Feuerraum (3) besitzt, der mit mindestens einem Zyklon (4) verbunden ist, welcher eine Innenwölbung und eine Außenwölbung aufweist, insbesondere für die Lieferung von Energie an einen Wärmetauscher (2) im Rahmen einer Anlage, die Elektrizität produziert, und die ausgehend von Brennstoff funktioniert, der unten in den Feuerraum eingeführt wird, wo eine reduzierende Atmosphäre geschaffen wird, und wo dieser Brennstoff eine Pyrolyse mit Trennung in zwei Phasen erfährt, wobei eine fest ist und aus Kokspartikeln besteht, die einen Stickstoff-Koks-Anteil enthalten, der von dem ursprünglichen Brennstoff herrührt, und die andere, gasförmige Phase flüchtige Bestandteile und insbesondere den Rückstand an Stickstoff enthält, der in dem ursprünglichen Brennstoff vorhanden ist, wobei die Partikel und die flüchtigen Bestandteile in dem Feuerraum aufsteigen, in dem die Verbrennung stattfindet, wobei unvollständig verbrannte Partikel zurückbleiben, welche durch den Zyklon angesaugt und wieder in den unteren Bereich des Feuerraums zurückgeschickt werden, und wobei das Verfahren **dadurch gekennzeichnet ist, dass** es eine Anordnung zur Lufteinblasung mit Elementen zum Einblasen von sogenannter verzögerter Luft (AT) (Frischluft und Heißluft) besitzt, die zwischen dem oberen Bereich des Feuerraumes und einem Eintritt des Zyklons angeordnet sind, und über Öffnungen (8a, 8b) realisiert werden, die sowohl im oberen Bereich als auch an einer Seite des Rohres (7) angeordnet sind, das den oberen Bereich des Feuerraumes mit dem Zyklon verbindet, und zwar zusätzlich zu Elementen, die eine Einblasung von Primärluft (AP) in den unteren Bereich des Feuerraums erlauben, um dort eine reduzierende Atmosphäre zu schaffen, sowie Elementen, die eine Einblasung von Sekundärluft (AS1, A52) erlauben, um in einem Bereich des Feuerraumes oberhalb der Zone, in der eine reduzierende Atmosphäre erzeugt wird, eine oxidierende Atmosphäre zu schaffen.

5. Verbrennungsanlage nach Anspruch 4, wobei die Elemente zur Einblasung von verzögerter Luft Düsen besitzen, die in ein Rohr (7) münden, mittels dessen der obere Bereich des Feuerraumes mit dem Zykloneintritt verbunden ist, und zwar über Öffnungen (8b), welche sich an der Wand des Rohres auf der Seite der Innenwölbung des Zyklons befinden.

6. Verbrennungsanlage nach Anspruch 5, wobei die Elemente zur Einblasung von verzögerter Luft Düsen besitzen, die über Öffnungen (8a) in das Rohr münden, welche durch die obere Seite des Rohres in dem Rohr angeordnet sind.

7. Verbrennungsanlage nach einem der Ansprüche 4 bis 6, bei der die Düsen für die verzögerte Luft von einem Luftvorwärmer der Anlage über einen Kreislauf, der die Sekundärluft dieser Anlage liefert, mit Heißluft und Frischluft versorgt werden.

8. Verbrennungsanlage nach einem der Ansprüche 4 bis 7, bei der Düsen für das Zusatzmittel in den Öffnungen der Düsen für die verzögerte Luft angeordnet sind, so dass sie mit ihrer Hilfe in das Rohr eindringen, und um das Eindringen des Zusatzmittels in die Rauchgasmasse, in die dieses Zusatzmittel eingeblasen wird, zu begünstigen.
